(19) Europäisches Patentamt
European Patent Office
Office européen des brevets

(11) Veröffentlichungsnummer: **0 311 910 B1**

# (12) EUROPÄISCHE PATENTSCHRIFT

(45) Veröffentlichungstag der Patentschrift: **23.12.92**

(51) Int. Cl.[5]: **C09B 67/22**, C09B 29/033

(21) Anmeldenummer: **88116556.7**

(22) Anmeldetag: **06.10.88**

## (54) Marineblaue und schwarze Farbstoffmischungen.

(30) Priorität: **13.10.87 DE 3734586**

(43) Veröffentlichungstag der Anmeldung:
**19.04.89 Patentblatt 89/16**

(45) Bekanntmachung des Hinweises auf die Patenterteilung:
**23.12.92 Patentblatt 92/52**

(84) Benannte Vertragsstaaten:
**CH DE FR GB IT LI**

(56) Entgegenhaltungen:
**FR-A- 2 190 883**

**RESEARCH DISCLOSURE, Oktober 1980, Seiten 425-427, Zusammenfassung Nr. 19826, Industrial opportunitties ltd, Havant, GB: "Discharge/resist printing of synthetic textile materials using thiophene-azo disperse dyestuffs in the presence of alkali"**

(73) Patentinhaber: **BASF Aktiengesellschaft**
**Carl-Bosch-Strasse 38**
**W-6700 Ludwigshafen(DE)**

(72) Erfinder: **Hahn, Erwin, Dr.**
**Am Buechsenackerhang 31**
**W-6900 Heidelberg(DE)**

Erfinder: **Hansen, Guenter, Dr.**
**Alwin-Mittasch-Platz 8**
**W-6700 Ludwigshafen(DE)**
Erfinder: **Etzbach, Karl-Heinz, Dr.**
**Carl-Bosch-Ring 55**
**W-6710 Frankenthal(DE)**
Erfinder: **Reichelt, Helmut, Dr.**
**Johann-Gottlieb-Fiechte-Strasse 56**
**W-6730 Neustadt(DE)**
Erfinder: **Schefczik, Ernst, Dr.**
**Dubliner Strasse 7**
**W-6700 Ludwigshafen(DE)**
Erfinder: **Degen, Helmut**
**Wildstrasse 32**
**W-6710 Frankenthal(DE)**
Erfinder: **Krallmann, Reinhold**
**Bachweg 2**
**W-6719 Weisenheim(DE)**
Erfinder: **Wagenblast, Gerhard, Dr.**
**Hanns-Fay-Strasse3**
**W-6710 Frankenthal(DE)**

EP 0 311 910 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue marineblaue und schwarze Farbstoffmischungen, enthaltend einen oder mehrere Thiophenazofarbstoffe, die ein Anilinderivat als Kupplungskomponente aufweisen, und einen oder mehrere Farbstoffe F, deren Absorptionsmaximum bei einer Wellenlänge von 390 bis 520 nm liegt.

Thiophenazofarbstoffe, die ein Anilinderivat als Kupplungskomponente aufweisen, sind bekannt und beispielsweise in der EP-A-201 896 beschrieben. Diese Farbstoffe ergeben auf Polyester Ausfärbungen in brillanten violetten bis blaugrünen Tönen. Weiterhin sind in Research Disclosure 1980, S. 425 bis 427, solche Farbstoffe in allgemeiner Weise beschrieben.

Es wurde nun überraschenderweise gefunden, daß man zu marineblauen und schwarzen Farbtönen gelangt, wenn man spezielle Thiophenazofarbstoffe, die ein Anilinderivat als Kupplungskomponente aufweisen, mit gelben und/oder orangen und/oder roten Farbstoffen mischt.

Gegenstand der vorliegenden Erfindung sind nun marineblaue und schwarze Farbstoffmischungen, enthaltend einen oder mehrere Thiophenazofarbstoffe der Formel

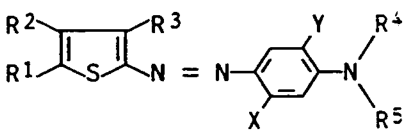

in der

| | |
|---|---|
| $R^1$ | Formyl, Cyano oder Phenylsulfonyl, |
| $R^2$ | Halogen, $C_1$-$C_8$-Alkoxy, gegebenenfalls substituiertes Phenoxy, $C_1$-$C_6$-Alkylthio, Phenylthio, $C_1$-$C_4$-Alkylsulfonyl oder Phenylsulfonyl, |
| $R^3$ | Cyano, $C_1$-$C_6$-Alkoxycarbonyl, dessen Alkylkette gegebenenfalls durch ein oder mehrere Sauerstoffatome unterbrochen ist, Carbamoyl oder $C_1$-$C_4$-Mono- oder Dialkylcarbamoyl, |
| $R^4$ und $R^5$ | gleich oder verschieden sind und unabhängig voneinander jeweils $C_1$-$C_4$-Alkyl, das gegebenenfalls durch Hydroxy, $C_1$-$C_4$-Alkoxy, Cyano, $C_1$-$C_4$-Alkanoyloxy, $C_1$-$C_4$-Alkoxycarbonyloxy oder $C_1$-$C_4$-Alkylaminocarbonyloxy substituiert ist, |
| X | Wasserstoff, $C_1$-$C_4$-Alkyl, $C_1$-$C_4$-Alkoxy, Chlor, Brom oder den Rest -NH-CO-$R^6$, wobei $R^6$ für $C_1$-$C_4$-Alkyl, das durch $C_1$-$C_4$-Alkoxy, Phenoxy, Cyano, Hydroxy, Chlor oder $C_1$-$C_4$-Alkanoyloxy substituiert sein kann, oder für gegebenenfalls durch $C_1$-$C_4$-Alkoxy substituiertes Phenoxy steht, und |
| Y | Wasserstoff, $C_1$-$C_4$-Alkyl oder $C_1$-$C_4$-Alkoxy bedeuten, und |

einen oder mehrere Farbstoffe F aus der Klasse der Dispersionsfarbstoffe, deren Absorptionsmaximum bei einer Wellenlänge von 390 bis 520 nm liegt, wobei der Anteil der Thiophenazofarbstoffe 60 bis 99 Gew.%, bezogen auf das Gesamtgewicht der Thiophenazofarbstoffe und der Farbstoffe F in der Mischung, beträgt.

Alle in der obengenannten Formel, betreffend die Thiophenazofarbstoffe, auftretenden Alkylgruppen können sowohl geradkettig als auch verzweigt sein.

Für den Fall, daß in der Formel der Thiophenazofarbstoffe substituierte Phenylgruppen auftreten, kommen als Substituenten z.B. $C_1$-$C_4$-Alkyl, $C_1$-$C_4$-Alkoxy oder Halogen in Betracht.

Für den Fall, dap in der Formel der Thiophenazofarbstoffe Alkylreste auftreten, die durch ein oder mehrere Sauerstoffatome unterbrochen sind, sind solche Reste bevorzugt, die durch ein oder zwei Sauerstoffatome unterbrochen sind.

$R^2$, X und Y bedeuten beispielsweise Methoxy, Ethoxy, Propoxy, Isopropoxy, Butoxy, Isobutoxy oder sec-Butoxy.

$R^2$ bedeutet weiterhin z.B. Pentyloxy, Isopentyloxy, Neopentyloxy, tert-Pentyloxy, Hexyloxy. Heptyloxy, Octyloxy, 2-Ethylhexyloxy, Fluor, Chlor, Brom, Phenoxy, 2-Chlorphenoxy, 4-Chlorphenoxy, 4-Methylphenoxy, 4-Methoxyphenoxy, Methylthio, Ethylthio, Propylthio, Isopropylthio, Butylthio, Isobutylthio, Pentylthio, Isopentylthio, Hexylthio, Methylsulfonyl, Ethylsulfonyl, Propylsulfonyl, Isopropylsulfonyl oder Butylsulfonyl.

X und Y bedeuten weiterhin z.B. Methyl, Ethyl, Propyl, Isopropyl, Butyl, Isobutyl, sec-Butyl oder tert-Butyl.

$R^3$ bedeutet z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl, tert-Pentyloxycarbonyl, Hexyloxycarbonyl, 2-Methoxyethoxycarbonyl, 2-Ethoxyethoxycarbonyl, 2-Propoxyethoxycarbonyl, 2-Butoxyethoxycarbonyl, 2- oder 3-Methoxypropoxycarbonyl, 2- oder 3-Ethoxypropoxycarbonyl, 3,6-Dioxaheptyloxycarbonyl, 3,6-Dioxaoctyloxycarbonyl, Methylcarbamoyl, Ethylcarbamoyl, Propylcarbamoyl, Isopropylcarbamoyl, Butylcarbamoyl, Dimethylcarbamoyl, Diethylcarbamoyl, Dipropylcarbamoyl, Dibutylcarbamoyl oder N-Methyl-N-ethylcarbamoyl.

$R^4$ und $R^5$ bedeuten weiterhin z.B. 2-hydroxyethyl, 2- oder 3-Hydroxypropyl, 4-Hydroxybutyl, 2-Methoxyethyl, 2-Ethoxyethyl, 2-Propoxyethyl, 2-Butoxyethyl, 2-Cyanoethyl, 2-Formyloxyethyl, 2-Acetyloxyethyl, 2-Propionyloxyethyl, 2-Butyryloxyethyl, 4-Acetyloxybutyl, 2-Methoxycarbonyloxyethyl, 2-Methylaminocarbonyloxyethyl, 2-Ethylaminocarbonyloxyethyl, 2-Propylaminocarbonyloxyethyl oder 2-Butylaminocarbonyloxyethyl.

Wenn X für den Rest NH-CO-$R^6$ steht, bedeutet $R^6$ beispielsweise Methyl, Ethyl, Propyl, Isopropyl, Butyl, Methoxymethyl, Ethoxymethyl, 1- oder 2-Methoxyethyl, 1- oder 2-Ethoxyethyl, Phenoxymethyl, 1- oder 2-Phenoxyethyl, Cyanomethyl, 2-Cyanoethyl, 3-Cyanopropyl, 4-Cyanobutyl, Hydroxymethyl, 1- oder 2-Hydroxyethyl, 2- oder 3-Hydroxypropyl, 4-Hydroxybutyl, Chlormethyl, 2-Chlorethyl, Formyloxymethyl, Acetyloxymethyl, 2-Formyloxyethyl, 2-Acetyloxyethyl, 2-Propionyloxyethyl, 2-Butyryloxyethyl, 3-Formyloxypropyl, 4-Acetyloxybutyl, Phenoxy, 2-Methoxyphenoxy, 4-Methoxyphenoxy, 4-Ethoxyphenoxy oder 4-Isopropoxyphenoxy.

Farbstoffe F, die ein Absorptionsmaximum bei einer Wellenlänge von 390 bis 520 nm aufweisen, stammen beispielsweise aus der Klasse der Mono- oder Disazofarbstoffe, Anthrachinone, Methinfarbstoffe, Chinophthalone, Naphtholactamfarbstoffe, Cumarinfarbstoffe oder Diphenylaminfarbstoffe.

Farbstoffe F, die aus der Klasse der Mono- oder Disazofarbstoffe stammen, sind beispielsweise C.I. Disperse Yellow 3 (11 855), C.I. Disperse Yellow 5 (12 790), C.I. Disperse Yellow 7 (26 090), C.I. Disperse Yellow 60 (12 712), C.I. Disperse Yellow 103, C.I. Disperse Yellow 114, C.I. Disperse Yellow 119, C.I. Disperse Yellow 126, C.I. Disperse Yellow 163, C.I. Disperse Yellow 180, C.I. Disperse Yellow 181, C.I. Disperse Yellow 182, C.I. Disperse Yellow 183, C.I. Disperse Yellow 198, C.I. Disperse Yellow 204, C.I. Disperse Yellow 211, C.I. Disperse Yellow 218, C.I. Disperse Yellow 223, C.I. Disperse Yellow 224, C.I. Disperse Yellow 227, C.I. Disperse Yellow 230, C.I. Disperse Yellow 231, C.I. Disperse Yellow 235, C.I. Disperse Orange 3 (11 005), C.I. Disperse Orange 13 (26 080), C.I. Disperse Orange 29 (26 007), C.I. Disperse Orange 30 (11 119), C.I. Disperse Orange 31, C.I. Disperse Orange 49, C.I. Disperse Orange 53, C.I. Disperse Orange 55, C.I. Disperse Orange 85, C.I. Disperse Orange 139, C.I. Disperse Orange 149, C.I. Disperse Orange 151, C.I. Disperse Red 50, C.I. Disperse Red 54:1, C.I. Disperse Red 65 (11 228), C.I. Disperse Red 72 (11 114), C.I. Disperse Red 74, C.I. Disperse Red 135, C.I. Disperse 167, C.I. Disperse Red 167:1, C.I. Disperse Red 184, C.I. Disperse Red 203, C.I. Disperse Red 224 oder C.I. Disperse Red 279. (Bei diesen Namen, wie auch bei den folgenden, handelt es sich um die gebräuchlichen Colour Index-Bezeichnungen der Farbstoffe.)

Farbstoffe F, die aus der Klasse der Anthrachinone stammen, sind beispielsweise C.I. Disperse Yellow 51, C.I. Disperse Orange 11 (60 700), C.I. Disperse Red 60 (60 756), C.I. Disperse Red 91 oder C.I. Disperse Red 72.

Farbstoffe F, die aus der Klasse der Methinfarbstoffe stammen, sind beispielsweise C.I. Disperse Yellow 12, C.I. Disperse Yellow 31 (48 000), C.I. Disperse Yellow 49, C.I. Disperse Yellow 61 (48 005), C.I. Disperse Yellow 88, C.I. Disperse Yellow 89, C.I. Disperse Yellow 90 (48 007), C.I. Disperse Yellow 93, C.I. Disperse Yellow 99 (48 420), C.I. Disperse Yellow 109, C.I. Disperse Yellow 116, C.I. Disperse Yellow 118, C.I. Disperse Yellow 124, C.I. Disperse Yellow 125, C.I. Disperse Yellow 131, C.I. Disperse Yellow 138, C.I. Disperse Yellow 142, C.I. Disperse Yellow 200, C.I. Disperse Yellow 201, C.I. Disperse Yellow 210 oder C.I. Disperse Orange 47.

Farbstoffe, die aus der Klasse der Chinophthalone stammen, sind beispielsweise C.I. Disperse Yellow 54 (47 020) oder C.I. Disperse Yellow 64 (47 023).

Farbstoffe, die aus der Klasse der Cumarine stammen, sind beispielsweise C.I. Disperse Yellow 82 oder C.I. Disperse Yellow 216.

Ein Farbstoff aus der Klasse der Naphtholactame ist beispielsweise C.I. Disperse Yellow 215.

Farbstoffe, die aus der Klasse der Diphenylamine stammen, sind beispielsweise C.I. Disperse Yellow 1 (10 345), C.I. Disperse Yellow 9 (10 375), C.I. Disperse Yellow 14 (10 340), C.I. Disperse Yellow 17 (10 349), C.I. Disperse Yellow 33 (10 337), C.I. Disperse Yellow 34, C.I. Disperse Yellow 42 (10 338), C.I. Disperse Yellow 59, C.I. Disperse Yellow 86 oder C.I. Disperse Orange 15 (10 350).

Farbstoffe F sind weiterhin z.B. C.I. Disperse Yellow 83 oder C.I. Disperse Orange 72.

Bevorzugt sind Farbstoffmischungen, die solche Farbstoffe F enthalten, die ein Absorptionsmaximum bei einer Wellenlänge von 400 bis 520 nm und insbesondere von 410 bis 510 nm aufweisen.

Weiterhin bevorzugt sind Farbstoffmischungen, die einen oder mehrere Thiophenazofarbstoffe der obengenannten Formel enthalten, in der $R^1$ Formyl, $R^2$ Chlor und $R^3$ Cyano oder $C_1$-$C_4$-Alkoxycarbonyl

bedeuten.

Weiterhin bevorzugt sind Farbstoffmischungen, die einen oder mehrere Farbstoffe F, die aus der Klasse der Mono- oder Disazofarbstoffe oder der Chinophthalonfarbstoffe stammen, enthalten.

Besonders wichtige marineblaue und schwarze Farbstoffmischungen sind solche, die als Farbstoffe F C.I. Disperse Yellow 64, C.I. Disperse Yellow 114, C.I. Disperse Yellow 198, C.I. Disperse Orange 13, C.I. Disperse Orange 29, C.I. Disperse Orange 30, C.I. Disperse Orange 49, C.I. Disperse Red 54:1, C.I. Disperse Red 135 oder C.I. Disperse Red 167:1 enthalten.

In den erfindungsgemäßen Farbstoffmischungen soll der Anteil der Thiophenazofarbstoffe 60 bis 99 Gew.%, bezogen auf das Gesamtgewicht der Thiophenazofarbstoffe und der Farbstoffe F in der Mischung, betragen. Bevorzugt sind dabei solche Farbstoffmischungen, in denen der Anteil der Thiophenazofarbstoffe 65 bis 95 Gew.%, bezogen auf das Gesamtgewicht der Thiophenazofarbstoffe und der Farbstoffe F in der Mischung, beträgt. Der Anteil der Farbstoffe F liegt folglich bei 1 bis 40 Gew.%, vorzugsweise 5 bis 35 Gew.%, jeweils bezogen auf das Gesamtgewicht der Thiophenazofarbstoffe und der Farbstoffe F in der Mischung. Diese Angaben beziehen sich jeweils nur auf die Farbstoffe, d.h. gegebenenfalls anwesende andere Komponenten sind dabei nicht berücksichtigt.

Die Herstellung der erfindungsgemäßen Farbstoffmischungen erfolgt durch Mischen der jeweiligen Partner im genannten Gewichtsverhältnis. Gegebenenfalls können den neuen Mischungen weitere Komponenten, z.B. Dispergiermittel, zugesetzt werden. Es ist auch möglich, bereits fertige Farbstoffpräparationen der jeweiligen Partner abzumischen, wobei hier ebenfalls das obengenannte Gewichtsverhältnis eingehalten werden muß.

Die neuen marineblauen und schwarzen Farbstoffmischungen eignen sich zum Färben und Bedrucken von Polyestergeweben. Man erhält dabei Ausfärbungen und Drucke in marineblauen bis schwarzen Tönen, die sich durch eine hohe Lichtechtheit auszeichnen.

Die Färbe- und Druckverfahren sind an sich bekannt. Nähere Einzelheiten können auch den Beispielen entnommen werden.

Ein weiterer Vorteil der erfindungsgemäßen Farbstoffmischungen liegt in ihrer arbeitsplatzhygienischen Unbedenklichkeit.

Die folgenden Beispiele sollen die Erfindung näher erläutern.

A) Färbevorschrift für das Ausziehverfahren

10 g Polyestergewebe werden bei einer Temperatur von 60 °C in 200 ml einer Färbeflotte gegeben, die $Z^1$ Gew.% Farbstoffmischung, bezogen auf das Polyestergewebe, enthält und deren pH-Wert mittels Essigsäure auf 4,5 eingestellt ist. Mann behandelt 5 Minuten bei 60 °C, steigert dann die Temperatur der Flotte innerhalb von 30 Minuten auf 135 °C, hält 60 Minuten bei dieser Temperatur und läßt dann innerhalb von 20 Minuten auf 60 °C abkühlen.

Danach wird das ausgefärbte Polyestergewebe reduktiv gereinigt, indem man es 15 Minuten in 200 ml einer Flotte, die 5 ml/l 32 gew.%ige Natronlauge, 3 g/l Natriumdithionit und 1 g/l eines Anlagerungsproduktes von 48 ml Ethylenoxid an 1 Mol Ricinusöl enthält, bei 65 °C behandelt. Schließlich wird das Gewebe gespült, mit verdünnter Essigsäure neutralisiert, nochmals gespült und getrocknet.

B) Färbevorschrift für das Thermosolverfahren

100 g Polyestergewebe werden in 1000 ml einer Färbeflotte gegeben, die $Z^2$ g/l Farbstoffmischung und 10 g/l eines Antimigrationsmittels auf Basis eines Copolymerisats von Acrylsäure enthält. Dann wird das Gewebe im Foulard auf 50 % Flottenaufnahme abgequetscht, 1 Minute bei 110 bis 115 °C getrocknet und anschließend 1 Minute bei 210 °C fixiert. Danach wird das gefärbte Gewebe gespült und, wie unter A) beschrieben, reduktiv gereinigt und fertiggestellt.

C) Vorschrift für das Druckverfahren

Eine Druckpaste wird aus 600 g eines Verdickungsmittels, das 20 g eines Stärkeethers und 40 g Kernmehlether in Wasser enthält, 15 g Nitrobenzolsulfonsäure, 40 g eines Fettsäureesters, $Z^3$ g Farbstoffmischung und soviel Wasser hergestellt, daß sich ein 1 kg der Druckpaste ergibt. Danach wird mit Zitronensäure ein pH-Wert von 5,5 eingestellt.

Polyestergewebe wird mit dieser Druckpaste bedruckt und 5 Minuten bei 70 °C getrocknet. Anschließend wird der Farbstoff bei einer Temperatur von 175 °C mit Heißdampf 6 Minuten lang fixiert. Das bedruckte Gewebe wird dann gespült und, wie unter A) beschrieben, reduktiv gereinigt und fertiggestellt.

Die in den folgenden Tabellen 1 und 2 aufgeführten Mischungen wurden jeweils nach dem Ausziehverfahren appliziert. Die eingesetzten Farbstoffmengen gelten für die Tiefe der Marineblaustufe 1.

Tabelle 1

| Bestandteile der Mischung [g] | Mischung Nr. 1 | 2 | 3 | 4 |
|---|---|---|---|---|
| 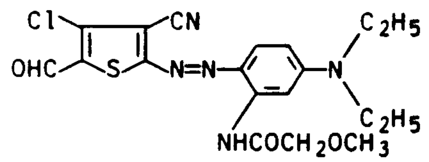 | 18 | 18 | 18 | 16 |
| 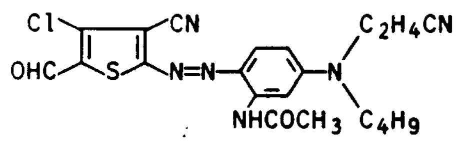 | - | 18 | - | - |
| 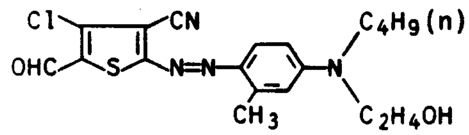 | - | - | 18 | - |
| 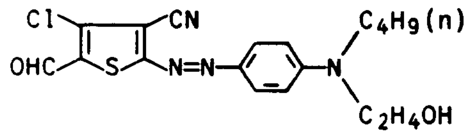 | 18 | - | - | - |
| 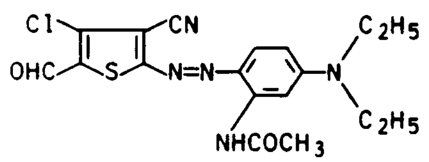 | - | - | - | 20 |

Tabelle 1 (Forsetzung)

| Bestandteile der Mischung [g] | Mischung Nr. 1 | 2 | 3 | 4 |
|---|---|---|---|---|
| C.I. Disperse Yellow 64 | 2 | - | 2 | 2 |
| C.I. Disperse Yellow 198 | - | 2 | - | - |
| Dispergiermittel auf Basis Ligninsulfonat | 62 | 62 | 62 | 62 |
| Verwendete Menge $Z^1$ der Mischung [Gew.%, bezogen auf Polyestergewebe] | 2,75 | 2,50 | 3,00 | 2,50 |

Tabelle 2

| Bestandteile der Mischung [g] | Mischung Nr. 5 | 6 | 7 | 8 |
|---|---|---|---|---|
| 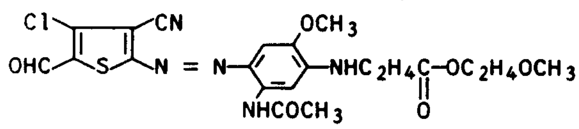 | 33 | 31 | - | - |
| 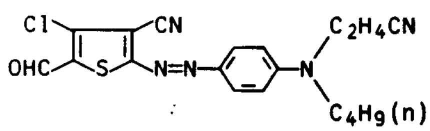 | 4,25 | - | 6,25 | - |
| 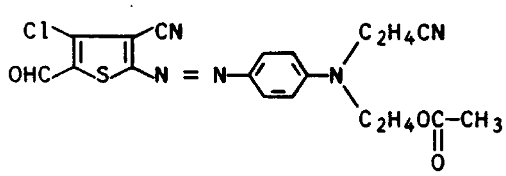 | - | 6,3 | - | 8 |
| 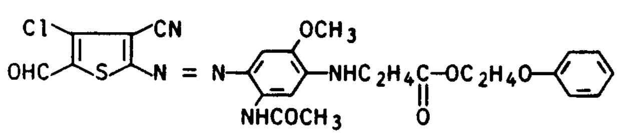 | - | - | 33,2 | 31,6 |
| C.I. Dipserse Red 54:1 | 2,75 | 2,7 | - | - |
| C.I. Disperse Red 167:1 | - | - | 0,55 | 0,4 |
| Dipsergiermittel auf Basis Ligninsulfonat | 60 | 60 | 60 | 60 |
| Verwendete Menge $Z^1$ der Mischung [Gew.%, bezogen auf Polyestergewebe] | 4,38 | 4,35 | 2,90 | 3,32 |

Die in der folgenden Tabelle 3 aufgeführten Mischungen wurden jeweils nach dem Thermosolverfahren appliziert. Die eingesetzten Farbstoffmengen ergeben bei den Mischungen 9 bis 12 Färbungen in der Tiefe der Marineblaustufe 1. Mischung 12 ergibt eine Färbung mit Schwarzton.

Tabelle 3

| Bestandteile der Mischung [g] | Mischung Nr. 9 | 10 | 11 | 12 |
|---|---|---|---|---|
| 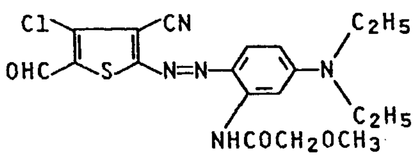 | 12 | 10,7 | 16 | 6 |
| 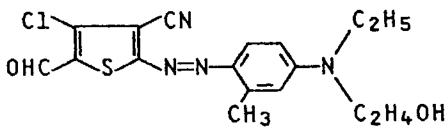 | 22 | - | - | - |
| 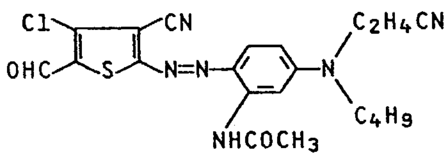 | - | 10,7 | - | - |
| 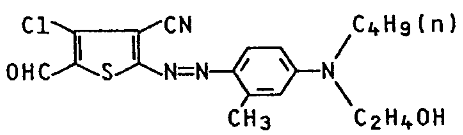 | - | - | 16 | - |
| 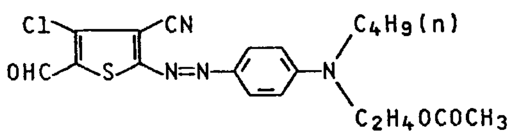 | - | - | - | 12 |
| 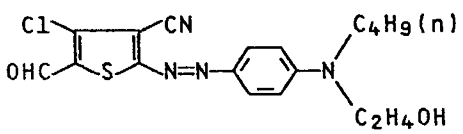 | - | 10,7 | - | - |
| 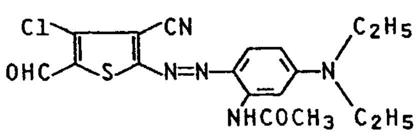 | - | - | - | 10 |

Tabelle 3 (Fortsetzung)

| Bestandteile der Mischung [g] | Mischung Nr. 9 | 10 | 11 | 12 |
|---|---|---|---|---|
| C.I. Disperse Yellow 198 | - | 4 | - | 2 |
| C.I. Disperse Orange 29 | 7,5 | - | 10 | 10 |
| Dispergiermittel auf Basis Ligninsulfonat | 58,5 | 63,9 | 58 | 60 |
| Verwendete Menge $Z^2$ der Mischung [g/l Klotzflotte] | 25 | 40 | 25 | 60 |

Die in der folgenden Tabelle 4 aufgeführten Mischungen wurden jeweils nach dem Druckverfahren appliziert. Die eingesetzten Farbstoffmengen ergeben bei der Mischung 13 einen Druck im Marineblauton und bei Mischung 14 im Schwarzton.

Tabelle 4

| Bestandteile der Mischung [g] | Mischung Nr. 13 | 14 |
|---|---|---|
| 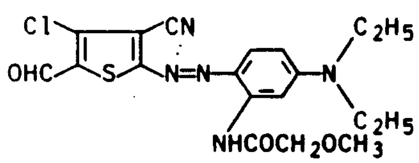 | 18 | 6 |
| 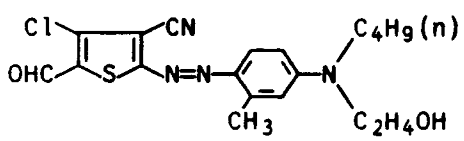 | 18 | - |
| 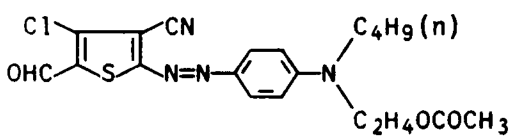 | - | 12 |

Tabelle 4 (Fortsetzung)

| Bestandteile der Mischung [g] | Mischung Nr. 13 | 14 |
|---|---|---|
| 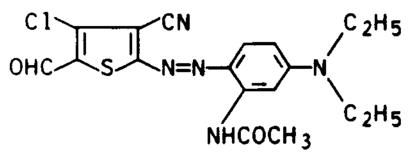 | - | 10 |
| C.I. Disperse Yellow 64 | 2 | 2 |
| C.I. Disperse Orange 29 | - | 10 |
| Dispergiermittel auf Basis Ligninsulfonat | 62 | 60 |
| Verwendete Menge $Z^3$ der Mischung [g/kg Druckpaste] | 40 | 80 |

**Patentansprüche**

**1.** Marineblaue und schwarze Farbstoffmischungen, enthaltend einen oder mehrere Thiophenazofarbstoffe der Formel

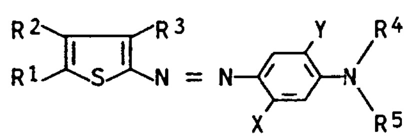

in der

| | |
|---|---|
| $R^1$ | Formyl, Cyano oder Phenylsulfonyl, |
| $R^2$ | Halogen, $C_1$-$C_8$-Alkoxy, gegebenenfalls substituiertes Phenoxy, $C_1$-$C_6$-Alkylthio, Phenylthio, $C_1$-$C_4$-Alkylsulfonyl oder Phenylsulfonyl, |
| $R^3$ | Cyano, $C_1$-$C_6$-Alkoxycarbonyl, dessen Alkylkette gegebenenfalls durch ein oder mehrere Sauerstoffatome unterbrochen ist, Carbamoyl oder $C_1$-$C_4$-Mono- oder Dialkylcarbamoyl, |
| $R^4$ und $R^5$ | gleich oder verschieden sind und unabhängig voneinander jeweils $C_1$-$C_4$-Alkyl, das gegebenenfalls durch Hydroxy, $C_1$-$C_4$-Alkoxy, Cyano, $C_1$-$C_4$-Alkanoyloxy, $C_1$-$C_4$-Alkoxycarbonyloxy oder $C_1$-$C_4$-Alkylaminocarbonyloxy substituiert ist, |
| X | Wasserstoff, $C_1$-$C_4$-Alkyl, $C_1$-$C_4$-Alkoxy, Chlor, Brom oder den Rest -NH-CO-$R^6$, wobei $R^6$ für $C_1$-$C_4$-Alkyl, das durch $C_1$-$C_4$-Alkoxy, Phenoxy, Cyano, Hydroxy, Chlor oder $C_1$-$C_4$-Alkanoyloxy substituiert sein kann, oder für gegebenenfalls durch $C_1$-$C_4$-Alkoxy substituiertes Phenoxy steht, und |
| Y | Wasserstoff, $C_1$-$C_4$-Alkyl oder $C_1$-$C_4$-Alkoxy bedeuten, und |

einen oder mehrere Farbstoffe F aus der Klasse der Dispersionsfarbstoffe, deren Absorptionsmaximum bei einer Wellenlänge von 390 bis 520 nm liegt, wobei der Anteil der Thiophenazofarbstoffe 60 bis 99 Gew.%, bezogen auf das Gesamtgewicht der Thiophenazofarbstoffe und der Farbstoffe F in der Mischung, beträgt.

**2.** Farbstoffmischungen gemäß Anspruch 1, dadurch gekennzeichnet, daß $R^1$ Formyl, $R^2$ Chlor und $R^3$ Cyano oder $C_1$-$C_4$-Alkoxycarbonyl bedeuten.

**3.** Farbstoffmischungen gemäß Anspruch 1, dadurch gekennzeichnet, daß sie als Farbstoffe F solche, die

aus der Klasse der Mono- oder Disazofarbstoffe oder Chinophthalonfarbstoffe stammen, enthalten.

**Claims**

**1.** A navy or black dye mixture containing one or more thiophene-azo dyes of the formula

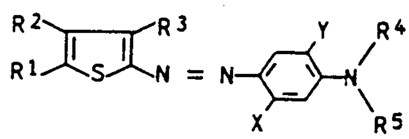

where
$R^1$ is formyl, cyano or phenylsulfonyl,
$R^2$ is halogen, $C_1$-$C_8$-alkoxy, substituted or unsubstituted phenoxy, $C_1$-$C_6$-alkylthio, phenylthio, $C_1$-$C_4$-alkylsulfonyl or phenylsulfonyl,
$R^3$ is cyano, $C_1$-$C_6$-alkoxycarbonyl whose alkyl chain may be interrupted by one or more oxygen atoms, carbamoyl or $C_1$-$C_4$-mono- or -dialkyl-carbamoyl,
$R^4$ and $R^5$ are identical or different and each is independently of the other $C_1$-$C_4$-alkyl which may be substituted by hydroxyl, $C_1$-$C_4$-alkoxy, cyano, $C_1$-$C_4$-alkanoyloxy, $C_1$-$C_4$-alkoxycarbonyloxy or $C_1$-$C_4$-alkylaminocarbonyloxy,
X is hydrogen, $C_1$-$C_4$-alkyl, $C_1$-$C_4$-alkoxy, chlorine, bromine or the radical -NH-CO-$R^6$, where $R^6$ is $C_1$-$C_4$-alkyl, which may be substituted by $C_1$-$C_4$-alkoxy, phenoxy, cyano, hydroxyl, chlorine or $C_1$-$C_4$-alkanoyloxy, or is unsubstituted or $C_1$-$C_4$-alkoxy-substituted phenoxy, and
Y is hydrogen, $C_1$-$C_4$-alkyl or $C_1$-$C_4$-alkoxy, and
one or more dyes F of the class of disperse dyes and whose absorption maximum is at a wavelength of from 390 to 520 nm, wherein the proportion of thiophene-azo dyes is from 60 to 99% by weight, based on the total weight of thiophene-azo dyes and dyes F in the mixture.

**2.** A dye mixture as claimed in claim 1, wherein $R^1$ is formyl, $R^2$ is chlorine and $R^3$ is cyano or $C_1$-$C_4$-alkoxycarbonyl.

**3.** A dye mixture as claimed in claim 1, containing as dyes F those which are members of the class of monoazo or disazo dyes or quinophthalone dyes.

**Revendications**

**1.** Mélanges de colorants bleu marine et noirs, contenant un au plusieurs colorants azoïques de la série des thiophènes de formule

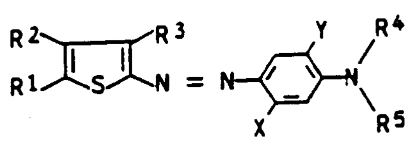

dans laquelle

| | |
|---|---|
| $R^1$ | représente un reste formyle, cyano ou phénylsulfonyle, |
| $R^2$ | représente un atome d'halogène au un reste alcoxy en $C_1$-$C_8$, phénoxy éventuellement substitué, alkylthio en $C_1$-$C_6$, phénylthio, alkylsulfonyle en $C_1$-$C_4$ ou phénylsulfonyle, |
| $R^3$ | représente un reste cyano, alcoxycarbonyle en $C_1$-$C_6$ dont la chaîne alkyle est éventuellement interrompue par un ou plusieurs atomes d'oxygène, carbamoyle ou mono- ou dialkylcarbamoyle en $C_1$-$C_4$, |
| $R^4$ et $R^5$ | sont identiques ou différents et représentent chacun, indépendamment l'un de l'autre, un reste alkyle en $C_1$-$C_4$ qui est eventuellement substitué par un groupement hydroxy, alcoxy en $C_1$-$C_4$, cyano, alcanoyloxy en $C_1$-$C_4$, alcoxycarbonyloxy en $C_1$-$C_4$ ou alkylaminocarbonyloxy en $C_1$-$C_4$, |

X représente un atome d'hydrogène, un reste alkyle en $C_1$-$C_4$, alcoxy en $C_1$-$C_4$, un atome de chlore ou de brome ou le reste -NH-CO-$R^6$, $R^6$ étant mis pour un reste alkyle en $C_1$-$C_4$ qui peut être substitué par un groupement alcoxy en $C_1$-$C_4$, phénoxy, cyano, hydroxy, chloro ou alcanoyloxy en $C_1$-$C_4$, ou pour un reste phénoxy éventuellement substitué par un groupement alcoxy en $C_1$-$C_4$, et

Y représente un atome d'hydrogène au un reste alkyle en $C_1$-$C_4$ ou alcoxy en $C_1$-$C_4$, et

un ou plusieurs colorants F de la catégorie des colorants de dispersion, dont le maximum d'absorption se situe à une longueur d'onde de 390 à 520 nm, la part des colorant azoïques de la série des thiophènes s'élevant à 60-99% en poids, par rapport au poids total des colorants azoïques de la série des thiophènes et des colorants F dans le mélange.

2. Mélanges de colorants selon la revendication 1, caractérisés en ce que $R^1$ représente un reste formyle, $R^2$ un atome de chlore et $R^3$ un reste cyano ou alcoxycarbonyle eu $C_1$-$C_4$.

3. Mélanges de colorants selon la revendication 1, caractérisés en ce qu'ils contiennent, en tant que colorants F, ceux qui proviennent de la classe des colorants mono- ou disazoïque ou des colorants de quinophtalone.